# FASCICULE DE BREVET EUROPEEN

(11) **EP 3 568 574 B1**
(45) Date de publication et mention de la délivrance du brevet: **25.11.2020**
(21) Numéro de dépôt: 18700942.8
(22) Date de dépôt: 05.01.2018
(51) Int. Cl.: F01D 11/24, F01D 25/24

(54) **ENSEMBLE D'ANNEAU DE TURBINE**
TURBINENRINGANORDNUNG
TURBINE RING ASSEMBLY

(30) Priorité: 12.01.2017 FR 1750257
(43) Date de publication de la demande: 20.11.2019
(73) Titulaire: Safran Aircraft Engines, 75015 Paris (FR)
(72) Inventeur: DUFFAU, Clément, Jean, Pierre, 77550 Moissy-Cramayel (FR); CONGRATEL, Sébastien, Serge, Francis, 77550 Moissy-Cramayel (FR); QUENNEHEN, Lucien, Henri, Jacques, 77550 Moissy-Cramayel (FR); TABLEAU, Nicolas, Paul, 77550 Moissy-Cramayel (FR)
(74) Mandataire: Cabinet Beau de Loménie
(86) Numéro de dépôt international: PCT/FR2018/050023
(87) Numéro de publication internationale: WO 2018/130766

(56) Documents cités:
- EP-A1- 3 051 071
- WO-A1-2014/123654
- US-A1- 2003 133 790
- US-A1- 2016 186 605

## Description

### Arrière-plan de l'invention

L'invention concerne un ensemble d'anneau de turbine comprenant une pluralité de secteurs d'anneau en matériau composite à matrice céramique ainsi qu'une structure de support d'anneau, nommée également carter.

Le domaine d'application de l'invention est notamment celui des moteurs aéronautiques à turbine à gaz. L'invention est toutefois applicable à d'autres turbomachines, par exemple des turbines industrielles.

Dans le cas d'ensembles d'anneau de turbine entièrement métalliques, il est nécessaire de refroidir tous les éléments de l'ensemble et en particulier l'anneau de turbine qui est soumis aux flux les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC) afin de s'affranchir de la mise en œuvre d'un matériau métallique.

Les matériaux CMC présentent de bonnes propriétés mécaniques les rendant aptes à constituer des éléments de structures et conservent avantageusement ces propriétés à températures élevées. La mise en œuvre de matériaux CMC a avantageusement permis de réduire le flux de refroidissement à imposer lors du fonctionnement et donc à augmenter la performance des turbomachines. En outre, la mise en œuvre de matériaux CMC permet avantageusement de diminuer la masse des turbomachines et de réduire l'effet de dilatation à chaud rencontré avec les pièces métalliques.

Toutefois, les matériaux CMC sont très raides et présentent un admissible mécanique faible en comparaison avec les alliages métalliques utilisés traditionnellement.

En outre, dans un moteur aéronautique à turbine à gaz, l'anneau de turbine haute pression est confronté à une source chaude, la veine, et une source froide qui est la cavité entre l'anneau et le carter, appelée par la suite « cavité anneau ».

En effet, la cavité anneau doit être à une pression supérieure à celle de la veine afin d'éviter que l'air de la veine ne puisse remonter et ne vienne brûler les pièces métalliques. Cette surpression est obtenue en prélevant de l'air au niveau du compresseur et en l'amenant dans la cavité anneau, ce qui explique que cet air soit « froid », puisqu'il n'est pas chauffé dans la chambre de combustion.

Ce besoin en surpression rend impossible la coupure totale de l'alimentation en air « froid » de la cavité anneau et donc impossible la suppression de la source froide. Il est donc impossible d'avoir un anneau avec une température homogène. Dès lors, il va y avoir des gradients thermiques importants, qui vont générer des contraintes mécaniques dans l'anneau.

Des études ont montré qu'il était nécessaire d'avoir un gradient thermique le plus radial possible, c'est-à-dire d'avoir des gradients thermiques axiaux et tangentiels les plus faibles possibles.

Une technique connue pour optimiser le refroidissement de la cavité anneau consiste à faire de l'impact : l'air de refroidissement passe à travers une tôle multi-perforée, ce qui l'accélère et augmente les coefficients d'échange avec la surface en vis-à-vis, qui correspond, dans le cas présent, à la face supérieure de l'anneau. Cela permet, avec la même température et le même débit d'air de refroidissement, de refroidir plus efficacement une zone de l'anneau.

Toutefois, il faut forcer le passage de l'air à travers cette tôle. Sinon, l'air ne passera pas par les trous et le refroidissement sera inefficace. Sur anneau métallique, cela est réalisé au moyen d'une soudure sur le pourtour de l'anneau.

Transposer cette technologie sur anneau en CMC est impossible pour deux raisons.

Premièrement, le coefficient de dilatation entre une tôle métallique et un anneau en CMC est trop important. Les deux pièces vont se déformer trop différemment pour avoir un maintien et une étanchéité durable dans le temps.

Deuxièmement, il est impossible de souder des pièces en matériau CMC. La tôle multi-perforée aurait pu être réalisée en CMC afin de pallier la difficulté du premier point. Cependant, il n'existe pas actuellement de technique de soudage/brasage d'une pièce en CMC avec une autre.

Une solution est d'exploiter le flux d'air dans la cavité anneau et de le faire travailler « intelligemment » de façon à atténuer les gradients axiaux et azimutaux. Pour cela, une technique connue consiste à incliner les trous d'alimentations de la cavité anneau pour induire un effet de tourbillon, ou « swirl » en anglais, et augmenter les coefficients d'échange et l'efficacité de refroidissement sur le patin de l'anneau.

Cette solution n'est pas adaptable aux anneaux de turbine présents sur les moteurs, car la présence de murets à chaque extrémité de portion annulaire d'anneau fait que la cavité anneau n'est pas axy-symétrique, et ne permet pas d'instaurer d'écoulement tournant global dans la cavité, c'est pourquoi les trous d'alimentation sont aujourd'hui purement axiaux. Des exemples de l'état de la technique des anneaux de turbine en CMC refroidis sont connu de US 2003/133790 A1, WO 2014/123654 A1 et EP 3 051 071 A1. US 2016/186605 A1 divulgue un autre exemple concernant la distribution d'air de refroidissement dans un anneau de turbine métallique.

### Objet et résumé de l'invention

L'invention vise à fournir un ensemble d'anneau de turbine comportant un anneau en matériau céramique à matrice composite offrant une injection d'un flux d'air dans la cavité anneau supprimant le gradient axial de température.

Un objet de l'invention propose un ensemble d'anneau de turbine comprenant une pluralité de secteurs d'anneau en matériau composite à matrice céramique formant un anneau de turbine et une structure de support d'anneau, chaque secteur d'anneau ayant, selon un premier plan de coupe défini par une direction axiale et une direction radiale de l'anneau de turbine, une partie formant base annulaire avec, dans la direction radiale de l'anneau de turbine, une face interne définissant la face interne de l'anneau de turbine et une face externe à partir de laquelle s'étendent une première et une seconde pattes d'accrochage définissant entre elles une cavité annulaire ouverte circonférentiellement, la structure de support d'anneau comportant une première et une seconde pattes radiales entre lesquelles sont maintenues les première et seconde pattes d'accrochage de chaque secteur d'anneau, et au moins un orifice d'injection d'un flux d'air de refroidissement dans la cavité annulaire.

Selon une caractéristique générale de l'invention, dans un deuxième plan de coupe comprenant la direction axiale de l'anneau et une direction orthogonale au premier plan de coupe, ledit orifice d'injection forme avec ladite direction orthogonale au premier plan de coupe un premier angle d'alimentation compris entre -80° et +80° et de préférence entre -60° et -30°.

L'absence de paroi de séparation entre les cavités annulaires des secteurs d'anneau permet de former une cavité annulaire continue sur toute la circonférence de l'anneau et ainsi de permettre la génération et la circulation d'un écoulement tournant du flux d'air refroidissement dans la cavité annulaire de l'anneau.

Le premier angle d'alimentation permet de diriger le flux d'air de refroidissement injecté au travers de la structure de support d'anneau dans un sens de rotation autour de l'anneau et non axialement, c'est-à-dire orthogonalement à la direction circonférentielle, ou circulaire, de l'anneau. Cela permet de forcer et de guider le flux d'air de refroidissement injecté dans la direction circonférentielle de la cavité annulaire et ainsi de favoriser la formation d'un écoulement tournant.

Dans l'état de la technique, la tôle d'impact fixée directement sur un anneau métallique permet d'augmenter le refroidissement très localement, alors que l'écoulement tournant généré par l'objet de l'invention permet d'augmenter le coefficient d'échange global dans la cavité annulaire et ainsi d'améliorer le profil thermique de l'anneau. Et ce sans avoir besoin d'utiliser une pièce supplémentaire comme une tôle d'impact. Cela permet ainsi de réaliser un gain en masse ainsi qu'en temps de fabrication.

Selon un premier aspect de l'ensemble d'anneau de turbine, dans ledit premier plan de coupe, l'orifice forme avec la direction axiale un second angle d'alimentation strictement supérieur à 0° et inférieur ou égal à 30°.

Le second angle d'alimentation permet de diriger le flux d'air de refroidissement vers la cavité annulaire et ainsi d'éviter une interaction avec la patte d'accrochage en regard de l'orifice d'injection.

Selon un deuxième aspect de l'ensemble d'anneau de turbine, la structure de support d'anneau comprend une pluralité d'orifices d'injection répartis régulièrement sur une même circonférence de l'anneau.

Cela permet d'avoir un écoulement tournant mieux établi et donc une meilleure homogénéité du refroidissement de l'anneau.

Selon un troisième aspect de l'ensemble d'anneau de turbine, chaque secteur d'anneau comprend au moins un perturbateur fluidique disposée sur la face externe de l'anneau à l'intérieur de la cavité annulaire.

Le perturbateur fluidique disposé dans la cavité annulaire d'un secteur d'anneau permet de créer des turbulences et ainsi d'augmenter les coefficients d'échange avec l'anneau.

Dans une variante du troisième aspect de l'ensemble d'anneau de turbine, chaque secteur d'anneau comprend une pluralité de perturbateurs fluidiques répartis sur la face externe de l'anneau à l'intérieur de la cavité annulaire.

Un autre de l'objet propose une turbomachine comprenant un ensemble d'anneau de turbine tel que défini ci-dessus.

Encore un autre de l'objet propose un aéronef comprenant au moins une turbomachine tel que défini ci-dessus.

### Brève description des dessins.

L'invention sera mieux comprise à la lecture faite ci-après, à titre indicatif mais non limitatif, en référence aux dessins annexés sur lesquels :
- la figure 1 est une vue schématique en coupe axiale d'un premier mode de réalisation d'un ensemble d'anneau de turbine selon l'invention ;
- la figure 2 est une vue schématique de face de la structure de support d'anneau de l'ensemble d'anneau de turbine de la figure 1 ;
- la figure 3 est une vue schématique de dessus de la structure de support d'anneau de l'ensemble d'anneau de turbine de la figure 1 ;
- la figure 4 est vue schématique en coupe axiale d'un second mode de réalisation d'un ensemble d'anneau de turbine selon l'invention.

### Description détaillée de modes de réalisation

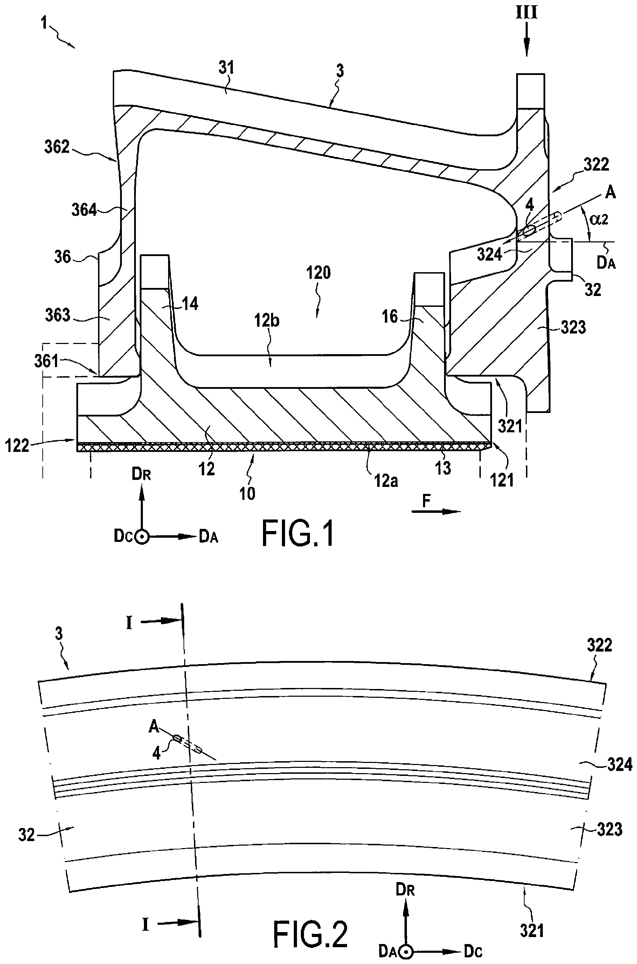

La figure 1 montre un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, la figure 1 étant une vue en section axiale définie par la direction axiale de l'anneau de turbine 1 repérée par la flèche D_{A} et par la direction radiale de l'anneau de turbine 1 repérée par la flèche D_{R}.

Chaque secteur d'anneau 10 présente, selon un premier plan (noté I sur la figure 2) défini par les directions axiale D_{A} et radiale D_{R}, une section sensiblement en forme de la lettre grecque π inversée. La section comprend en effet une base annulaire 12 et des pattes radiales d'accrochage amont et aval 14 et 16. Les termes "amont" et "aval" sont utilisés ici en référence au sens d'écoulement du flux gazeux dans la turbine représenté par la flèche F sur la figure 1. Les pattes du secteur d'anneau 10 pourraient avoir une autre forme, la section du secteur d'anneau présentant un autre forme que π, comme par exemple une forme en k.

La base annulaire 12 comporte, suivant la direction radiale D_{R} de l'anneau 1, une face interne 12a et une face externe 12b opposées l'une à l'autre. La face interne 12a de la base annulaire 12 est revêtue d'une couche 13 de matériau abradable formant une barrière thermique et environnementale et définit une veine d'écoulement de flux gazeux dans la turbine.

Les pattes radiales d'accrochage amont et aval 14 et 16 s'étendent en saillie, suivant la direction D_{R}, à partir de la face externe 12b de la base annulaire 12 à distance des extrémités amont et aval 121 et 122 de la base annulaire 12. Les pattes radiales d'accrochage amont et aval 14 et 16 s'étendent sur toute la largeur du secteur d'anneau 10, c'est-à-dire sur tout l'arc de cercle décrit par le secteur d'anneau 10, ou encore sur toute la longueur circonférentielle du secteur d'anneau 10.

La base annulaire 12 et les pattes d'accrochage amont et aval 14 et 16 de chaque secteur d'anneau 10 forment ensemble une cavité annulaire 120 ouverte sur un côté opposé à la base annulaire 12 et à chaque extrémité circulaire du secteur d'anneau 10, c'est-à-dire à chaque extrémité du secteur d'anneau 10 au contact d'un autre secteur d'anneau 10 lorsque l'anneau 1 est assemblé. L'anneau 1 comprend ainsi une cavité annulaire en communication fluidique sur toute la circonférence de l'anneau 1.

Comme cela est illustré sur la figure 1, la structure de support d'anneau 3 qui est solidaire d'un carter de turbine comprend une couronne centrale 31 ayant un axe de révolution confondu avec l'axe de révolution de l'anneau de turbine 1 lorsqu'ils sont fixés ensemble. La couronne centrale 31 s'étend dans la direction axiale D_{A} de l'anneau 1 et dans la direction circonférentielle de l'anneau 1. La structure de support d'anneau 3 comprend en outre une bride radiale annulaire amont 32 et une bride radiale annulaire aval 36 qui s'étendent, suivant la direction radiale D_{R}, depuis la couronne centrale 31 vers le centre de l'anneau 1 et dans la direction circonférentielle de l'anneau 1.

Comme cela est illustré sur la figure 1, la bride radiale annulaire aval 36 comprend une première extrémité 361 libre et une seconde extrémité 362 solidaire de la couronne centrale 31. La bride radiale annulaire aval 36 comporte une première portion 363 et une seconde portion 364, la première portion 363 s'étendant entre la première extrémité 361 et la seconde portion 364, et la seconde portion 364 s'étendant entre la première portion 363 et la seconde extrémité 362. La première portion 363 de la bride radiale annulaire aval 36 est au contact de la patte radiale d'accrochage aval 16. La seconde portion 364 est amincie par rapport à la première portion 363 de manière à donner une certaine souplesse à la bride radiale annulaire aval 36 et ainsi ne pas trop contraindre l'anneau de turbine 1 en CMC.

De manière similaire, la bride radiale annulaire amont 32 comprend une première extrémité 321 libre et une seconde extrémité 322 solidaire de la couronne centrale 31. La bride radiale annulaire amont 32 comporte une première portion 323 et une seconde portion 324, la première portion 323 s'étendant entre la première extrémité 321 et la seconde portion 324, et la seconde portion 324 s'étendant entre la première portion 323 et la seconde extrémité 322. La première portion 323 de la bride radiale annulaire amont 32 est au contact de la patte radiale d'accrochage amont 14. La seconde portion 324 est amincie par rapport à la première portion 323 de manière à donner une certaine souplesse à la bride radiale annulaire amont 32 et ainsi ne pas trop contraindre l'anneau de turbine 1 en CMC.

Dans la direction axiale D_{A}, la bride radiale annulaire aval 36 de la structure de support d'anneau 3 est séparée de la bride radiale annulaire amont 32 d'une distance correspondant à l'écartement des pattes radiales d'accrochage amont et aval 14 et 16 de manière à maintenir ces dernières entre la bride radiale annulaire aval 36 et la bride radiale annulaire amont 32.

La structure de support d'anneau 3 comprend, pour chaque secteur d'anneau 10, un orifice 4 d'injection d'un flux d'air de refroidissement, représenté par la flèche A, dans la cavité annulaire 120. Chaque orifice 4 d'injection est réalisé dans la seconde portion 324 de la bride radiale annulaire amont 32.

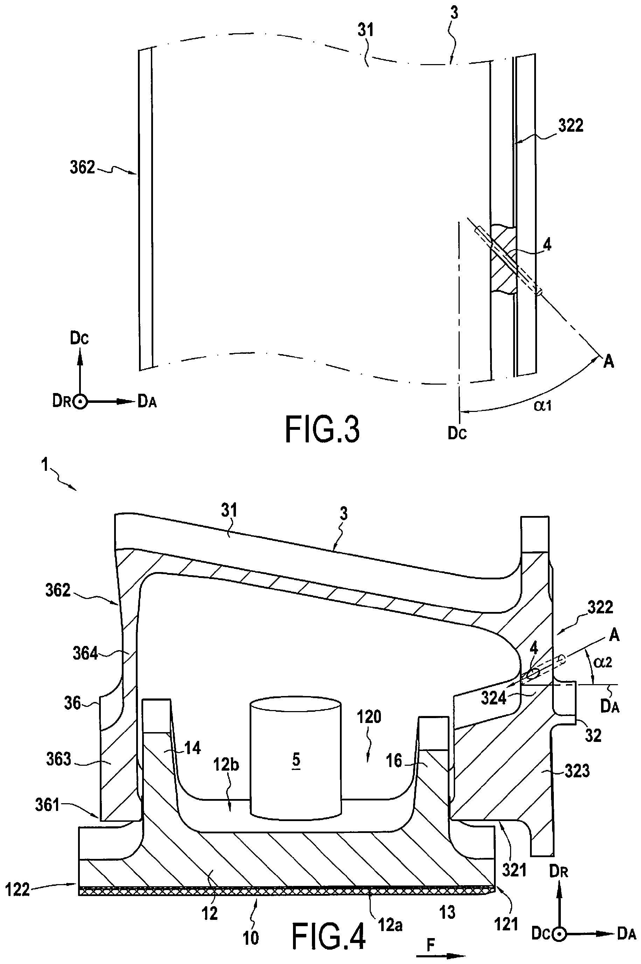

Les figures 2 et 3 présentent respectivement une vue schématique de face et une vue schématique de dessus de la structure de support d'anneau 3 de l'ensemble d'anneau de turbine de la figure 1.

Comme illustré sur les figures 2 et 3, l'orifice d'injection 4 présente une direction A non orthogonale avec un deuxième plan dans lequel s'étend la bride radiale annulaire amont 32, et non comprise dans un troisième plan orthogonal au plan dans lequel s'étend la bride radiale annulaire amont 32. Le deuxième plan est défini par la direction radiale D_{R} et une direction orthogonale au premier plan I. La direction orthogonale au premier plan I est repérée par la référence D_{C} et correspondant à la tangente à la direction circonférentielle de l'anneau à l'intersection de la direction circonférentielle avec le premier plan de coupe I. Par la suite la direction D_{C} orthogonale au premier plan de coupe I est nommée direction tangentielle D_{C}. Le troisième plan est défini par la direction tangentielle D_{C} et la direction axiale D_{A}.

Plus précisément, comme cela est illustré sur la figure 3, dans le troisième plan, l'orifice d'injection 4 forme avec la direction tangentielle D_{C} un premier angle d'alimentation α₁ compris entre -80° et +80° et de préférence entre -60° et -30°. Dans le mode de réalisation illustré sur les figures 2 et 3, le premier angle d'alimentation α₁ présente une valeur de 45°.

Le premier angle d'alimentation α₁ permet d'initier une direction au flux d'air de refroidissement injecté par l'orifice d'injection 4 au travers de la structure de support d'anneau 3 permettant d'induire un écoulement circulaire dans la cavité annulaire 120 pour augmenter le coefficient d'échange global dans la cavité annulaire et améliorer le profil thermique de l'anneau.

Comme cela est illustré sur la figure 1, dans le premier plan I défini par la direction radiale D_{R} et la direction axiale D_{A}, l'orifice d'injection 4 forme avec la direction axiale D_{A} un second angle d'alimentation α₂ strictement supérieur à 0° et inférieur ou égal à 30°.

Le second angle d'alimentation α₂ permet de diriger le flux d'air de refroidissement vers la cavité annulaire 120 et ainsi d'éviter une interaction avec la patte d'accrochage aval 16 et avec la patte d'accrochage amont 14.

Sur la figure 4 est illustré une vue schématique en coupe axiale d'un second mode de réalisation d'un ensemble d'anneau de turbine selon l'invention.

Dans ce second mode de réalisation, tous les éléments identiques au premier mode de réalisation illustré sur les figures 1 à 3 portent les mêmes références numériques.

Le second mode de réalisation diffère du premier mode de réalisation en ce que chaque secteur d'anneau 10 comprend un bloc de perturbation fluidique 5 monté sur la face externe 12b de l'anneau 1 à l'intérieur de la cavité annulaire 120, c'est-à-dire entre les pattes d'accrochage amont et aval 14 et 16, pour créer des turbulences et ainsi augmenter les coefficients d'échange avec l'anneau 1 pour chaque secteur d'anneau 10.

On décrit maintenant un procédé de réalisation d'un ensemble d'anneau de turbine correspondant à celui représenté sur la figure 1.

Chaque secteur d'anneau 10 décrit ci-avant est réalisé en matériau composite à matrice céramique (CMC) par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique, par exemple des fils en fibres SiC tels que ceux commercialisés par la société japonaise Nippon Carbon sous la dénomination "Hi-NicalonS", ou des fils en fibres de carbone.

La préforme fibreuse est avantageusement réalisée par tissage tridimensionnel, ou tissage multicouches avec aménagement de zones de déliaison permettant d'écarter les parties de préformes correspondant aux pattes 14 et 16 des secteurs 10.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche peut être mise en forme pour obtenir une préforme de secteur d'anneau qui est consolidée et densifiée par une matrice céramique, la densification pouvant être réalisée notamment par infiltration chimique en phase gazeuse (CVI) qui est bien connue en soi. Dans une variante, la préforme textile peut être un peu durcie par CVI pour qu'elle soit suffisamment rigide pour être manipulée, avant de faire remonter du silicium liquide par capillarité dans le textile pour faire la densification (« Melt Infiltration »).

Un exemple détaillé de fabrication de secteurs d'anneau en CMC est notamment décrit dans le document US 2012/0027572.

La structure de support d'anneau 3 est quant à elle réalisée en un matériau métallique tel qu'un alliage Waspaloy® ou inconel 718 ou encore C263.

La réalisation de l'ensemble d'anneau de turbine se poursuit par le montage des secteurs d'anneau 10 sur la structure de support d'anneau 3. Pour cela, les secteurs d'anneau 10 sont assemblés ensemble sur un outil annulaire de type « araignée » comportant, par exemple, des ventouses configurées pour maintenir chacune un secteur d'anneau 10. L'assemblage des secteurs d'anneau 10 est réalisé en insérant des languettes d'étanchéité intersectorielle entre chaque paire de secteurs d'anneau. L'anneau 1 est ensuite monté sur la structure de support d'anneau 3 qui comprend un orifice d'injection d'un flux d'air de refroidissement dans la cavité annulaire pour chaque secteur d'anneau 10.

L'invention fournit ainsi un ensemble d'anneau de turbine comportant un anneau en matériau céramique à matrice composite offrant une injection d'un flux d'air dans la cavité anneau supprimant le gradient axial de température.

## Revendications

1. Ensemble d'anneau de turbine comprenant une pluralité de secteurs d'anneau (10) en matériau composite à matrice céramique formant un anneau de turbine (1) et une structure de support d'anneau (3), chaque secteur d'anneau (10) ayant, selon un premier plan de coupe (I) défini par une direction axiale (D_{A}) et une direction radiale (D_{R}) de l'anneau de turbine (1), une partie formant base annulaire (12) avec, dans la direction radiale (D_{R}) de l'anneau de turbine (1), une face interne (12a) définissant la face interne de l'anneau de turbine (1) et une face externe (12b) à partir de laquelle s'étendent une première et une seconde pattes d'accrochage (14, 16) définissant entre elles une cavité annulaire (120) ouverte circonférentiellement, la structure de support d'anneau (3) comportant une première et une seconde pattes radiales entre lesquelles sont maintenues les première et seconde pattes d'accrochage (14, 16) de chaque secteur d'anneau (10), et au moins un orifice (4) d'injection d'un flux d'air de refroidissement dans la cavité annulaire (120),
**Caractérisée en ce que**, dans un deuxième plan de coupe comprenant la direction axiale (D_{A}) de l'anneau (1) et une direction (D_{C}) orthogonale au premier plan de coupe (I), ledit orifice d'injection (4) forme avec ladite direction (D_{C}) orthogonale au premier plan de coupe (I) un premier angle d'alimentation (α₁) compris entre -80° et +80°.

2. Ensemble selon la revendication 1, dans lequel, dans ledit premier plan de coupe, l'orifice d'injection (4) forme avec la direction axiale (D_{A}) un second angle d'alimentation (α₂) strictement supérieur à 0° et inférieur ou égal à 30°.

3. Ensemble selon l'une des revendications 1 ou 2, dans lequel la structure de support d'anneau (3) comprend une pluralité d'orifices d'injection (4) répartis régulièrement sur une même circonférence de l'anneau (1).

4. Ensemble selon l'une des revendications 1 à 3, dans lequel chaque secteur d'anneau (10) comprend au moins un perturbateur fluidique disposée sur la face externe (12b) de l'anneau (1) à l'intérieur de la cavité annulaire (120).

5. Ensemble selon la revendication 4, dans lequel chaque secteur d'anneau (10) comprend une pluralité de perturbateurs fluidiques répartis sur la face externe (12b) de l'anneau (1) à l'intérieur de la cavité annulaire (120).

6. Ensemble selon l'une des revendications 1 à 5, dans lequel le premier angle d'alimentation (α₁) est compris entre -60° et -30°.

7. Turbomachine comprenant un ensemble d'anneau de turbine (1) selon l'une quelconque des revendications 1 à 6.

## Patentansprüche

1. Turbinenringanordnung, umfassend eine Vielzahl von Ringsektoren (10) aus Keramikmatrix-Verbundwerkstoff, die einen Turbinenring (1) bilden, sowie eine Ringtragstruktur (3), wobei jeder Ringsektor (10) entlang einer ersten Schnittebene (I), die durch eine axiale Richtung (D_{A}) und eine radiale Richtung (D_{R}) des Turbinenrings (1) definiert ist, einen eine ringförmige Basis (12) bildenden Teil aufweist, mit - in der radialen Richtung (D_{R}) des Turbinenrings (1) - einer Innenseite (12a), welche die Innenseite des Turbinenrings (1) definiert, und einer Außenseite (12b), von der ausgehend sich eine erste und eine zweite Einhaklasche (14, 16) erstrecken, die zwischen sich einen in Umfangsrichtung offenen ringförmigen Hohlraum (120) definieren, wobei die Ringtragstruktur (3) eine erste und eine zweite radiale Lasche umfasst, zwischen denen die erste und die zweite Einhaklasche(14, 16) jedes Ringsektors (10) gehalten sind, sowie wenigstens eine Öffnung (4) zum Einspritzen eines Kühlluftstroms in den ringförmigen Hohlraum (120),
**dadurch gekennzeichnet, dass** sich in einer zweiten Schnittebene, welche die axiale Richtung (D_{A}) des Rings (1) und eine Richtung (D_{C}) orthogonal zu der ersten Schnittebene (I) umfasst, die Einspritzöffnung (4) mit der Richtung (D_{C}) orthogonal zu der ersten Schnittebene (I) einen ersten Zuführwinkel (α₁) im Bereich zwischen -80° und + 80° bildet.

2. Anordnung nach Anspruch 1, bei der die Einspritzöffnung (4) in der ersten Schnittebene mit der axialen Richtung (D_{A}) einen zweiten Zuführwinkel (α₂) bildet, der streng größer als 0° ist und kleiner als oder gleich 30° ist.

3. Anordnung nach einem der Ansprüche 1 oder 2, bei der die Ringtragstruktur (3) eine Vielzahl von Einspritzöffnungen (4) umfasst, die über einen gleichen Umfang des Rings (1) gleichmäßig verteilt sind.

4. Anordnung nach einem der Ansprüche 1 bis 3, bei der jeder Ringsektor (10) wenigstens eine strömungstechnische Störvorrichtung umfasst, die auf der Außenseite (12b) des Rings (1) innerhalb des ringförmigen Hohlraums (120) angeordnet ist.

5. Anordnung nach Anspruch 4, bei der jeder Ringsektor (10) eine Vielzahl von strömungstechnischen Störvorrichtungen umfasst, die auf der Außenseite (12b) des Rings (1) innerhalb des ringförmigen Hohlraums (120) verteilt sind.

6. Anordnung nach einem der Ansprüche 1 bis 5, bei der der erste Zuführwinkel (α₁) im Bereich zwischen -60° und -30° liegt.

7. Turbomaschine, die eine Turbinenringanordnung (1) nach einem der Ansprüche 1 bis 6 umfasst.

## Claims

1. A turbine ring assembly comprising a ring support structure (3) and a plurality of ring sectors (10) made of ceramic matrix composite material so as to form a turbine ring (1), each ring sector (10) presenting, in a first section plane (I) defined by an axial direction (D_{A}) and a radial direction (D_{R}) of the turbine ring (1), a portion that forms an annular base (12) having in the radial direction (D_{R}) of the turbine ring (1) both an inner face (12a) defining the inside face of the turbine ring (1) and an outer face (12b) from which there extend first and second attachment tabs (14, 16) defining between them a circumferentially-open annular cavity (120), the ring support structure (3) having first and second radial tabs between which the first and second attachment tabs (14, 16) of each ring sector (10) are held, together with at least one injection orifice (4) for injecting a stream of cooling air into the annular cavity (120);
the assembly being **characterized in that**, in a second section plane containing the axial direction (D_{A}) of the ring (1) and a direction (D_{C}) orthogonal to the first section plane (I), said injection orifice (4) forms a first feed angle (α1) relative to said direction (D_{C}) that is orthogonal to the first section plane (I), which first feed angle (α1) lies in the range -80° to +80°.

2. An assembly according to claim 1, wherein, in said first section plane, the injection orifice (4) forms a second feed angle (α2) relative to the axial direction (D_{A}), which second feed angle (α2) is strictly greater than 0° and less than or equal to 30°.

3. An assembly according to claim 1 or claim 2, wherein the ring support structure (3) has a plurality of injection orifices (4) regularly distributed over a common circumference of the ring (1).

4. An assembly according to any one of claims 1 to 3, wherein each ring sector (10) has at least one fluid flow disturber arranged on the outer face (12b) of the ring (1) inside the annular cavity (120).

5. An assembly according to claim 4, wherein each ring sector (10) has a plurality of fluid flow disturbers distributed over the outer face (12b) of the ring (1) inside the annular cavity (120).

6. An assembly according to any one of claims 1 to 5, wherein the first feed angle (α1) lies in the range -60° to -30°.

7. A turbine engine including a turbine ring assembly (1) according to any one of claims 1 to 6.
